# EUROPÄISCHE PATENTSCHRIFT

(11) **EP 3 884 779 B1**
(45) Veröffentlichungstag und Bekanntmachung des Hinweises auf die Patenterteilung: **10.07.2024**
(21) Anmeldenummer: 20166147.7
(22) Anmeldetag: 27.03.2020
(51) Int. Cl.: A21C 3/04, A21C 3/10

(54) **VORRICHTUNG UND VERFAHREN ZUM VERARBEITEN VON TEIG**
METHOD AND DEVICE FOR PROCESSING DOUGH
DISPOSITIF ET PROCÉDÉ DE TRAITEMENT DE PÂTE

(43) Veröffentlichungstag der Anmeldung: 29.09.2021
(73) Patentinhaber: Albert Handtmann Maschinenfabrik GmbH & Co. KG, 88400 Biberach/Riss (DE)
(72) Erfinder: HIRSCH, Rudolf, 88255 Baindt (DE); TEUFEL, Daniel, 88433 Altheim (DE); KAESTLE, Karlheinz, 88471 Laupheim (DE); BAECHTLE, Manfred, 88433 Schemmerhofen (DE)
(74) Vertreter: Grünecker Patent- und Rechtsanwälte PartG mbB

(56) Entgegenhaltungen:
- CN-U- 202 425 510
- DE-A1- 4 417 336
- JP-A- 2002 325 538
- US-A- 1 702 191
- US-A- 4 012 532
- US-A- 4 820 470

## Beschreibung

Die Erfindung betrifft eine Vorrichtung zum Verarbeiten von Teig, in Form eines Teigteilers für die Nahrungsmittelindustrie sowie ein entsprechendes Verfahren gemäß den Oberbegriffen der Ansprüche 1 und 9.

Aus der JP2002325538 A ist bereits eine Extrusionseinrichtung bekannt, bei der zum Beispiel Eis extrudiert wird und an der Außenseite noch ein weiteres Lebensmittel, zum Beispiel ein Reisteig koextrudiert wird. Um das ausgestoßene stabförmige Lebensmittelmaterial kann kalte Luft geblasen werden. Die Kühlung mittels kalter Luft erfolgt nach dem Ausstoß, d.h. nach einer Auslassöffnung. Der Reisteig liegt nicht in Form eines Teigstrangs vor, sondern wird ringförmig gefördert. Bei diesem Dokument geht es darum, die Temperaturdifferenz zwischen dem inneren Lebensmittel, d.h. zum Beispiel dem Eis und dem äußeren Lebensmittel, d.h. dem Reis, zu minimieren.

Aus der US 4,012,532 ist bereits eine Vorrichtung zum Unterteilen von ausgestoßenen Spaghetti bekannt. Die Spaghettistangen werden extrudiert und fallen in eine Abteileinrichtung. Die Extrusionspumpe ist mit keiner Rohrleitung mit einer Belüftungseinrichtung verbunden.

Weiter offenbart der US4820470 A einen Teigteiler nach dem Stand der Technik.

Vorrichtungen und Verfahren zum Verarbeiten von Teig, insbesondere Teigteiler, sind bereits aus dem Stand der Technik bekannt. Mit entsprechenden Vorrichtungen können Teige für die industrielle Herstellung maschinell verarbeitet werden.

Dabei können beispielsweise Teige geknetet, gefördert und in Einzelportionen unterteilt werden.

Während der maschinellen Verarbeitung kommt der Teig mit verschiedenen Werkstoffoberflächen in Berührung. Der Teig wird dabei beispielsweise über Pumpen an diesen Werkstoffoberflächen entlang bewegt.

Hier ist vor allem die Adhäsionsneigung bzw. Klebrigkeit der Teige eine Eigenschaft, die die maschinelle Verarbeitung erschwert. Die Klebrigkeit von Teigen nimmt mit zunehmenden Wasseranteil bzw. mit steigender Teigausbeute zu. Die Teigausbeute ist das in Zahlen ausgedrückte Verhältnis zwischen der im Teig verwendeten Menge an Lebensmittelfeststoff, d.h. insbesondere Getreideerzeugnissen und der Menge an Schüttflüssigkeit wie Wasser, Milch, Öle etc.

Eine hohe Teigausbeute ist kennzeichnend für einen weichen Teig, eine niedrige Teigausbeute für einen festeren Teig. Mechanische Beanspruchung von Teigen kann ebenfalls zu einer Zunahme der Teigklebrigkeit führen. Unter Teig versteht man in dieser Anmeldung mit Schüttflüssigkeit versetzten Lebensmittelfeststoff, insbesondere in Form eines zerkleinerten (insbesondere gemahlenen) Getreideerzeugnisses oder Pflanzenerzeugnisses, z.B. Brotteig. Unter den Begriff Teig fallen neben Lebensmittelteigen auch Teige für Tiernahrung.

Aufgrund der Klebrigkeit der Teige kommt es zur Anhaftung, also Adhäsion an diesen Werkstoffoberflächen. Wird der Teig nun an der Werkstoffoberfläche entlang bewegt, treten zwei Effekte auf:
Zum einen wird der anhaftende Teig immer wieder von der Werkstoffoberfläche gelöst, sodass es zu einem Adhäsionsbruch kommt. Zum anderen kommt es zum ringförmigen Strukturabriss zwischen der an der Werkstoffoberfläche anhaftenden Teigschicht und dem übrigen sich bewegenden Teigvolumen, das heißt, es kommt zu einem Kohäsionsbruch.

Welcher Effekt überwiegt, ist abhängig von Faktoren wie Teigkonsistenz, Werkstoffoberflächenbeschaffenheit oder Bewegungsgeschwindigkeit. Die zuvor genannten beiden Effekte sind abhängig von der Reibung. Bei höherem Druck, zum Beispiel beim Pumpen des Teigs durch Rohrleitungen kommt es zu einer stärkeren Reibung.

Die Reibung zwischen Teig und Werkstoffoberfläche geht mit einer mechanischen Beanspruchung der an der Werkstoffoberfläche lokalisierten Teigschicht einher. Diese mechanische Beanspruchung führt also zu Strukturschädigung in der oberflächlichen Teigschicht, was mit einer Freisetzung von vorher in der Teigstruktur gebundenem Wasser einhergeht. Dieses freigesetzte Wasser resultiert in einer unerwünschten stärkeren Klebrigkeit der Teigoberfläche. Neben der nachteiligen, stärkeren Klebrigkeit wird durch die beschriebene Reibung auch die Produktqualität aufgrund der Strukturschädigung negativ beeinflusst.

Mechanische Beanspruchung (zum Beispiel Scherung, Druckbelastung, Dehnung, Stauchung) von Teigen tritt, wie oben beschrieben, vor allem dann auf, wenn der Teig in Kontakt mit den Werkstoffoberflächen steht und an diesen entlang bewegt wird. Dies ist unter anderem auch der Fall während des Knetens, der Teigteilung, der Formgebung oder der Aufarbeitung.

Besonders problematisch ist der Effekt einer Zunahme der Teigklebrigkeit im Zuge des Teigteilungsvorgangs. Beim Prozessschritt der Teigteilung wird der aus dem Kneter kommende Teig in Einzelportionen geteilt. Diese Einzelportionen werden nach dem Teigteiler über Transportbänder transportiert und weiter aufgearbeitet, zum Beispiel rundgewirkt.

Je klebriger der Teig nach dem Teigteilvorgang ist, desto stärker neigt der Teig dazu, an den für seinen Transport verwendeten Transportbändern oder Wirkeinrichtungen anzuhaften und diese mit Produktrückständen zu verschmutzen.

Es wurde bereits versucht, die Reibung zwischen Teig und der Werkstoffoberfläche durch Einbringen eines Flüssigkeitsfilms, zum Beispiel Wasser oder Öl, zu reduzieren. Dies bringt jedoch den Nachteil mit sich, dass diese flüssigen Trennmittel einerseits im Produkt verbleiben, und andererseits überschüssiges Trennmittel wieder aufgefangen werden muss. Nachfolgende Anlagen neigen dazu, durch überschüssiges Trennmittel zu verschmutzen, da z.B. zugeführtes Wasser wiederum die Klebrigkeit des Teigs verstärkt. Trennmittel sind als Verbrauchsmaterial zudem ein entscheidender Kostenfaktor (zum Beispiel Öl als Trennmittel). Außerdem wird durch mögliche Trennmitteleinschlüsse im Teig die Produktqualität verringert. Hiervon ausgehend liegt der vorliegenden Erfindung die Aufgabe zugrunde, einen Teigteiler sowie ein entsprechendes Verfahren bereitzustellen, die ermöglichen, auf einfache Art und Weise die Klebrigkeit von Teig an dessen Oberfläche zu reduzieren und insbesondere auch reibungsbedingte Strukturschäden des Teigs bei der maschinellen Verarbeitung zu vermeiden.

Erfindungsgemäß wird diese Aufgabe durch die Merkmale der Ansprüche 1 und 9 gelöst.

Die erfindungsgemäße Vorrichtung zum Verarbeiten von Teig, d.h. der Teigteiler umfasst unter anderem eine

Pumpeinrichtung, über die Teig, der beispielsweise zuvor geknetet wurde, in einer sich anschließenden Rohrleitung mit freiem Querschnitt zu einer Auslassöffnung hin gefördert wird. Der Teig wird dann über die Auslassöffnung der Rohrleitung ausgestoßen und kann dort mittels Trenneinrichtung abgetrennt werden.

Unter Rohrleitung mit freiem Querschnitt versteht man, dass kein Mischrohr gemeint ist, sondern eine Rohrleitung, in der ein Teigstrang mit geschlossenem Außenmantel gefördert werden kann. D.h. die Rohrleitung weist im Inneren keine weiteren Einrichtungen zum Mischen auf, insbesondere kein Rührwerk, keinen Strömungsbrecher, keine Einrichtung zum Unterteilen des Teigstrangs in eine Vielzahl von Einzelsträngen. Gemeint ist also lediglich ein leeres Rohr, in dem gegebenenfalls noch ein z.B. konisch zulaufendes Formteil eingefügt werden kann um den Durchmesser insbesondere kontinuierlich zu verkleinern.

Unter Teigstrang mit geschlossenen Außenmantel versteht man einen durchgehenden Strang. Der Außenmantel weist dabei z.B. eine im wesentlichen zylinderförmige Außenkontur auf, d.h. eine zur Innenwandung komplementäre Form.

Um die Reibung zwischen Teig und der Werkstoffoberfläche, an der sich der Teig entlang bewegt, zu minimieren, ist erfindungsgemäß eine Belüftungseinrichtung vorgesehen, die ein gasförmiges Medium zwischen Rohrinnenwand und Außenmantel des Teigs einbringen kann. Somit entsteht ein Luftpuffer um den geschlossenen Außenmantel des Teigs, derart, dass die Reibung wesentlich reduziert werden kann. Dadurch verringert sich die mechanische Beanspruchung auf den Teig, was die Strukturschädigung in der oberflächlichen Teigschicht sowie die Freisetzung von Wasser vermindert. Gleichzeitig wird durch das gasförmige Medium auch Feuchtigkeit an der Teigoberfläche abgetrocknet und so die Adhäsionsneigung des Teigs verringert. Dies hat zur Folge, dass der Teig schonender gefördert und ggf. portioniert werden kann und eine bessere Produktqualität erreichbar ist. Insgesamt wird erreicht, dass der Teig an dessen Oberfläche weniger klebrig ist. Auch für nachfolgende Prozessschritte ist dies vorteilhaft. Beispielsweise kann die Klebrigkeit auf nachfolgenden Transportbändern minimiert werden. Bei einem nachfolgenden Rundwirken kann auch auf ein zusätzliches Anblasen des Teigs mit Gas verzichtet werden, zumindest kann es aber stark reduziert werden.

Insgesamt kann somit auch der Ausschuss reduziert werden und somit auch die Rohstoffkosten verringert werden. Ferner ergibt sich eine Erhöhung der Produktivität, der Prozessstabilität, eine verbesserte Hygiene, da es zu keinen Anhaftungen von Teig an der Rohrinnenwand kommt.

Unter Rohrinnenwand versteht man die Innenwand des Rohrs, die dem Teig zugewandt ist und die in Kontakt mit dem gasförmigen Medium steht.

Bei der vorliegenden Erfindung soll also das gasförmige Medium nicht in den Teig eingearbeitet werden, sondern außerhalb des Teigs, zwischen Teigstrang und Rohrinnenseite bleiben.

Dabei ist erfindungsgemäß eine oder mehrere Belüftungseinrichtungen vorgesehen.

Die Belüftungseinrichtung umfasst erfindungsgemäß mindestens eine Öffnung in der Rohrleitung, über die das gasförmige Medium zuführbar ist, wobei die mindestens eine Öffnung als Spalt, insbesondere Ringspalt oder als um den Umfang des Rohrs verteilte Öffnungen, insbesondere als Lochkranz oder in Form eines Sintermaterials ausgebildet ist.

Somit kann über die mindestens eine Öffnung das gasförmige Medium zwischen den Außenmantel des Teigs und der Rohrinnenwand einströmen und sich um den Außenmantel des Teigs verteilen und sich Richtung Auslassöffnung bewegen.

Vorteilhafterweise befindet sich eine Belüftungseinrichtung im Endbereich der Rohrleitung. Das bedeutet, dass die mindestens eine Öffnung circa 2 bis 150mm von der Auslassöffnung beabstandet sein kann. Die gezielte Belüftung innerhalb des Auslassbereichs der Rohrleitung bewirkt bei geringerem Aufwand eine höhere Reduzierung der Oberflächenfeuchte, als dies zum Beispiel durch das Belüften auf einem nachfolgenden Transportband der Fall ist. Somit ist der ausgestoßene Teig ideal vorbereitet auf nachfolgende Prozesse.

Vorteilhafterweise umfasst die Belüftungseinrichtung eine Einrichtung, die das gasförmige Medium unter Druck zuführen kann, insbesondere eine Pumpe, Kompressor oder einen Druckbehälter, zum Beispiel Gasflasche etc. Wenn der Druck des zugeführten gasförmigen Mediums größer ist als der Druck in der Rohrleitung, kann das gasförmige Medium entsprechend eingeleitet werden.

Dazu weist die Belüftungseinrichtung erfindungsgemäß eine ringförmige Verteilerkammer auf, über die das gasförmige Medium in die Öffnung(en) geleitet werden kann. Somit ist eine gleichmäßige Verteilung des gasförmigen Mediums um den Umfang des geförderten Teigs sichergestellt.

Die Rohrleitung, die sich an die Pumpe anschließt, kann beispielsweise ein Auslassrohr sein oder aber, bei längerem Transportweg ein Transportrohr und ein nachgeordnetes Auslassrohr, wobei das Transportrohr vorzugsweise länger ist als das Auslassrohr. Es ist auch möglich, dass das Auslassrohr optional einen Formeinsatz zum Formen des Teigs aufweist, der zum Beispiel einen kleineren Innendurchmesser hat als das Auslassrohr selbst aufweist. Ein entsprechender Formeinsatz ist zum Beispiel austauschbar.

Nach der Auslassöffnung kann eine Trenneinrichtung, zum Beispiel ein Rotationsmesser vorgesehen sein, um den Teig zu portionieren.

Wenn zum Beispiel im Auslassrohr ein Formteil eingefügt ist, bildet die Innenwand des Formteils die Rohrinnenwand, wobei die Öffnung zum Einbringen des gasförmigen Mediums sich dann z.B. bis durch das Formteil erstreckt, derart, dass das gasförmige Medium zwischen Rohrinnenwand und Teigmantelfläche einströmen kann. Alternativ oder zusätzlich kann die mindestens eine Öffnung in der Wandung des Auslassrohrs vor dem eingefügten Formatteil ausgebildet sein.

Bei einem längeren Transportweg ist es vorteilhaft, wenn mehrere Belüftungseinrichtungen in Transportrichtung T hintereinander angeordnet sind. Dies ist vorteilhaft, denn je länger das Rohr ist, desto höher ist die Belastung auf den Teig. Dies ist insbesondere auch wichtig, wenn das Transportrohr nicht gerade ist, sondern mindestens eine Biegung aufweist. Die mehreren Belüftungseinrichtungen können beispielsweise über Leitungen mit einer gemeinsamen Pumpe, Kompressor oder einem gemeinsamen Druckbehälter verbunden werden.

Es ist auch möglich, dass in Transportrichtung T nach der Auslassöffnung der Rohrleitung und nach einer Trenneinrichtung mindestens eine zusätzliche Düse angeordnet ist, die insbesondere derart gerichtet ist, dass gasförmiges Medium an die Stirnflächen des abgetrennten Teigs geblasen werden kann. Dabei kann eine Düse vorgesehen sein, die gasförmiges Medium an die in Transportrichtung betrachtet vordere Stirnfläche (Schnittfläche) bläst und/oder eine Düse, die gasförmiges Medium an die in Transportrichtung betrachtet hintere Stirnfläche (Schnittfläche) der abgeteilten Teigportionen bläst.

Bei dem erfindungsgemäßen Verfahren zum Abteilen von Teig mit insbesondere einer Vorrichtung nach mindestens einem der Ansprüche 1 bis 8 wird Teig über eine Pumpeinrichtung durch eine Rohrleitung mit freiem Rohrquerschnitt gefördert und mittels Belüftungseinrichtung ein gasförmiges Medium zwischen der Rohrinnenwand und dem Außenmantel des Teigstrangs eingebracht.

So kann sich das gasförmige Medium in Transportrichtung T in Richtung Auslassöffnung der Rohrleitung bewegen. Somit wird ein Luftpolster zwischen Außenmantel des Teigs und Rohrinnenwand erzeugt.

Das gasförmige Medium umfasst mindestens ein Gas aus folgender Gruppe: Druckluft, gereinigte Druckluft, Inertgas. Das gasförmige Medium kann getrocknet sein, z.B. getrocknete Luft. Das gasförmige Medium kann entweder aus den o.g. Gasen gebildet sein oder aber eine Mischung aus verschiedenen Gasen sein und/oder auch ein Aerosol sein, d.h. Aerosolpartikel aufweisen wie z.B. Öl.

Vorteilhafterweise ist der Druck des gasförmigen Mediums einstellbar, (z.B. über die Pump- oder Kompressorleistung, über ein Stellventil oder Regelventil, etc.) und insbesondere größer als der Druck in der Rohrleitung. Somit kann der Volumenstrom des gasförmigen Mediums an die Art des Teigs und auch an zum Beispiel den Durchmesser des Teigstrangs, zum Beispiel bei eingesetzten Formteilen, angepasst werden.

Am Auslassende der Rohrleitung kann eine Trenneinrichtung vorgesehen sein, die den Teigstrang in Einzelportionen abteilt. Der Teig kann dann beispielsweise auf einer weiteren Transporteinrichtung, zum Beispiel Transportband weitergefördert werden, oder aber bereits abgefüllt werden, zum Beispiel in Formen.

Es ist auch möglich, dass der abgeteilte Teig nach Verlassen der Rohrleitung an seiner vorderen und/oder hinteren Stirnseite über eine oder mehrere weitere Düsen mit gasförmigen Medium angeblasen wird. Dabei sind die Düsen z.B. derart angeordnet, dass, wenn die in Transportrichtung betrachtete vordere Stirnseite angeblasen wird, der restliche Teil der Portion noch nicht abgetrennt ist oder abgetrennt wird. Die Düsen sind z.B. 5 cm - 50 cm in Axialrichtung des Rohrs betrachtet von der Auslassöffnung beabstandet.

Gemäß der vorliegenden Erfindung ist es also möglich, dass zwischen Rohrinnenwand und dem geschlossenen Außenmantel des Teigstrangs ein Luftpolster um den Außenmantel des Teigstrangs erzeugt wird, das insbesondere eine Stärke von d = 0,05 mm - 3 mm aufweist, wobei die Rohrleitung insbesondere einen Durchmesser von 30 mm - 120 mm aufweist.

Die vorliegende Erfindung wird nachfolgend unter Bezugnahme der folgenden Figuren näher erläutert.
Figur 1 zeigt schematisch ein Ausführungsbeispiel gemäß der vorliegenden Erfindung.
Figur 2 zeigt schematisch einen Längsschnitt durch ein Auslassrohr gemäß der vorliegenden Erfindung.
Figur 3 zeigt schematisch einen Längsschnitt durch ein Auslassrohr mit einem Formteil gemäß einem weiteren Ausführungsbeispiel der vorliegenden Erfindung.
Figur 4 zeigt grob schematisch einen Längsschnitt durch ein Auslassrohr mit einem Formteil gemäß einem weiteren Ausführungsbeispiel der vorliegenden Erfindung.
Figur 5 zeigt grob schematisch einen Längsschnitt durch ein Auslassrohr und ein Transportrohr mit mehreren Belüftungseinrichtungen gemäß einem weiteren Ausführungsbeispiel der vorliegenden Erfindung.
Figur 6 zeigt einen Längsschnitt durch ein Auslassrohr gemäß einem weiteren Ausführungsbeispiel der vorliegenden Erfindung.
Figur 7 zeigt schematisch einen Teilschnitt durch eine Rohrleitung mit Teigstrang und umhüllendes Luftpolster

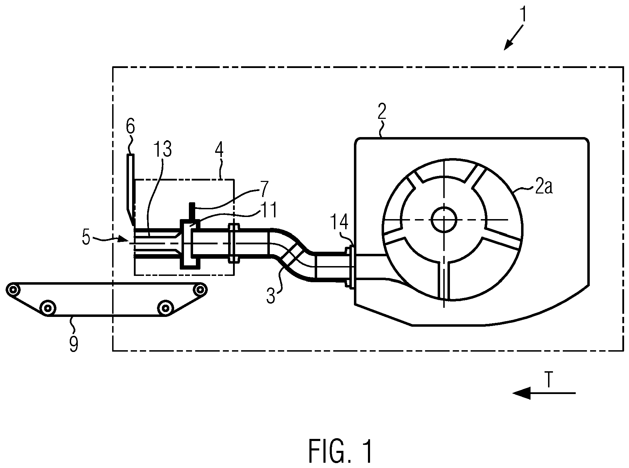

Figur 1 zeigt grob schematisch einen Schnitt durch einen Teigteiler gemäß der vorliegenden Erfindung. Die erfindungsgemäße Vorrichtung umfasst eine Pumpeinrichtung 2, das heißt hier, die Pumpeinheit, die ein Förderwerk 2a, zum Beispiel in Form einer Flügelzellenpumpe umfasst. Die Pumpeinrichtung 2 kann beispielsweise Teig aus einem Fülltrichter oder einem Mischbehälter mit einem Rührwerk an dessen unteren Ende abpumpen und in eine sich an die Pumpeinrichtung 2 anschließende Rohrleitung 4,3 in Form eines Teigstrangs hineinpumpen. Die Rohrleitung ist hier zum Beispiel zusammengesetzt aus einem Transportrohr 3 und einem Auslassrohr 4, wobei die Rohrleitung 3,4 eine Auslassöffnung 5 aufweist, über die der geförderte Teigstrang 10 ausgestoßen werden kann. Die Rohrleitung, hier das Transportrohr 3, ist über einen Rohrflansch 14 mit der Pumpeneinrichtung 2 verbunden. Bei diesem Ausführungsbeispiel kann beispielsweise in Transportrichtung T nach der Auslassöffnung 5 eine weitere Transporteinrichtung, zum Beispiel in Form eines Transportbands 9 vorgesehen sein. Die Vorrichtung 1, die hier z.B. als Teigteiler ausgebildet ist, weist auch eine Trenneinrichtung 6, hier zum Beispiel in Form eines beweglichen Messers auf, das Teig portionsweise vom geförderten Teigstrang abtrennen kann.

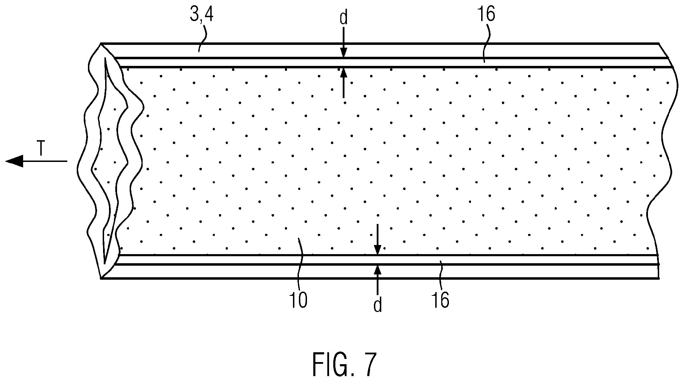

Gemäß der vorliegenden Erfindung ist es also möglich, dass zwischen Rohrinnenwand und dem geschlossenen Außenmantel des Teigstrangs ein in Fig. 7 gezeigtes Luftpolster um den Außenmantel des Teigstrangs erzeugt wird, das insbesondere eine Stärke von d = 0,05 mm - 3 mm und die Rohrleitung insbesondere einen Durchmesser von 30 mm - 120 mm aufweist, wobei dann auch der abgeteilte Teigstrang insbesondere eine Länge aufweist, die im wesentlichen dem Durchmesser der Rohrleitung entspricht (+/- 20% ) oder länger als der Durchmesser der Rorleitung ist ( z.B. bis zu 120 mm oder länger).

Gemäß der vorliegenden Erfindung ist in einem Bereich zwischen der Pumpeinrichtung 2 und der Auslassöffnung 5 der Rohrleitung 3 mindestens eine Belüftungseinrichtung 7 vorgesehen, die derart ausgebildet ist, dass ein gasförmiges Medium zwischen Rohrinnenwand und Außenmantel des Teigs eingebracht werden kann.

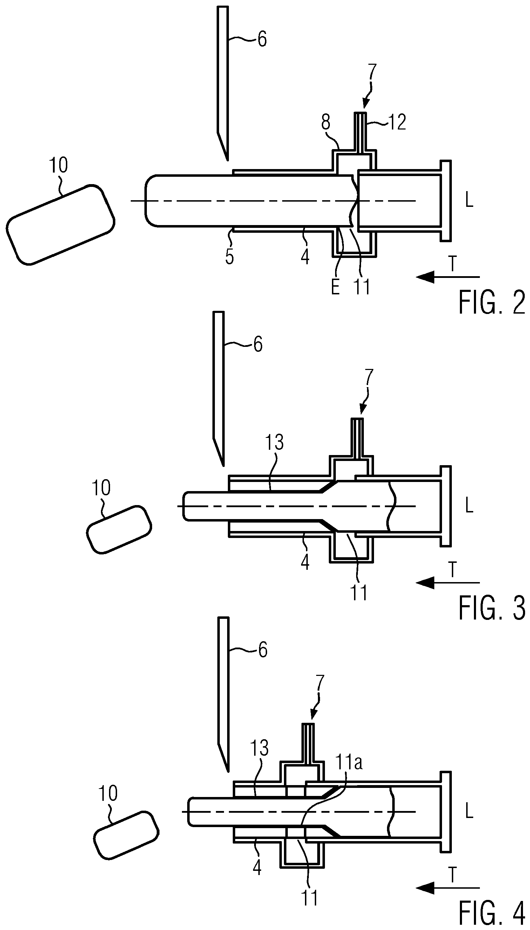

Figur 2 zeigt die Belüftungseinrichtung 7 in größerem Detail. Figur 2 zeigt einen Längsschnitt durch ein Auslassrohr 4, das an die Pumpeinrichtung oder ein Transportrohr 3 angeschlossen sein kann. Das Auslassrohr 4 weist eine Öffnung 11 auf, über die die Belüftungseinrichtung 7 das gasförmige Medium zuführen kann. Die mindestens eine Öffnung 11 ist erfindungsgemäß als Spalt, zum Beispiel Ringspalt oder als um den Umfang des Rohrs verteilte Öffnungen, insbesondere als Lochkranz ausgebildet sein. Dabei können die Öffnungen unterschiedlich angeordnet sein. Wesentlich ist, dass das gasförmige Medium um die Mantelfläche herum einbringbar ist. Die Öffnungen können auch in Form eines Sintermaterials ausgebildet sein, das heißt, um die mittlere Längsachse L des Auslassrohrs 4 herum.

Im Fall eines Spalts weist dieser zum Beispiel eine Breite in einem Bereich von 0,02 bis 5 mm auf. Die Spaltbreite kann fest oder einstellbar sein, indem das Auslassrohr 4 über ein Gewinde mit dem Transportrohr 3 verbunden ist. Um den Spalt 11 herum ist erfindungsgemäß eine ringförmige Verteilerkammer 8 angeordnet, über die das gasförmige Medium in die mindestens eine Öffnung 11 geleitet werden kann. Die ringförmige Verteilerkammer 8 kann über eine Leitung 12 mit einer Einrichtung verbunden werden, die das gasförmige Medium unter Druck zuführen kann, insbesondere eine Pumpe, zum Beispiel Kompressor für Druckluft oder einen Druckbehälter, beispielsweise eine Gasflasche. Dabei kann der Druck und / oder der Volumenstrom des gasförmigen Mediums eingestellt werden. Die ringförmige Verteilerkammer 8 gewährleistet eine gleichmäßige Verteilung des gasförmigen Mediums um den Umfang des Außenmantels des Teigstrangs 10.

In diesem Ausführungsbeispiel ist die Belüftungseinrichtung 7 am Auslassrohr angeordnet, das heißt, hier in einem Auslassbereich, derart, dass die Öffnung 11, das heißt, das vordere Ende E in Axialrichtung L betrachtet, etwa 2 bis 150mm von der Auslassöffnung 5 entfernt ist. Die gezielte Belüftung innerhalb des Auslassbereichs bewirkt bei geringerem Aufwand eine höhere Reduzierung der Oberflächenfeuchte, als dies durch das Belüften zum Beispiel auf den nachfolgenden Transportband 9 der Fall wäre. Insgesamt bringt die Belüftungseinrichtung 7 die folgenden Vorteile mit sich:
Es entsteht ein Luftpuffer 16, wie in Fig. 7 dargestellt ist, um den geschlossenen Außenmantel des Teigstrangs derart, dass die Reibung wesentlich reduziert werden kann. Dadurch verringert sich die mechanische Beanspruchung auf den Teig, was auf die Strukturschädigung in der oberflächlichen Teigschicht sowie die Freisetzung von Wasser vermindert. Gleichzeitig wird durch das gasförmige Medium auch Feuchtigkeit an der Teigoberfläche abgetrocknet und so die Adhäsionsneigung des Teigs verringert. Dies hat zur Folge, dass der Teig schonender gefördert und ggf. portioniert werden kann und eine bessere Produktqualität erreichbar ist. Insgesamt wird erreicht, dass der Teig weniger klebrig ist. Auch für nachfolgende Prozessschritte ist dies vorteilhaft. Beispielsweise kann die Klebrigkeit auf nachfolgenden Transportbändern minimiert werden. Bei einem nachfolgenden Rundwirken kann auch auf ein zusätzliches Anblasen des Teigs mit Gas verzichtet werden, zumindest kann es aber stark reduziert werden.

Insgesamt kann somit auch der Ausschuss reduziert werden und somit auch die Rohstoffkosten verringert werden. Ferner ergibt sich eine Erhöhung der Produktivität, der Prozessstabilität, eine verbesserte Hygiene, da es zu keinen Anhaftungen von Teig an der Rohrinnenwand kommt.

Figur 3 zeigt eine weitere Ausführungsform der vorliegenden Erfindung, die im Wesentlichen den vorherigen Ausführungsformen entspricht. Hier ist zusätzlich ein Formteil in Form eines Formeinsatzes 13 in das Auslassrohr 4 eingesetzt. Mithilfe eines Formteils 13 kann die Form, zum Beispiel der Durchmesser des Teigs eingestellt - hier reduziert - werden. Es können unterschiedliche Formteile in das Auslassrohr 4 eingesetzt werden, um ein gewünschtes Produkt zu produzieren. Bei diesem Ausführungsbeispiel ist die Öffnung 11 in Transportrichtung T vor dem Formteil 13 angeordnet. Das Formteil 13 schließt dabei dicht mit dem Auslassrohrs 4 ab. Die Innenwand des Formteils 13 bildet jetzt die Rohrinnenwand, an der der Teig 10 vorbeigleitet und zwischen der und dem Teig 10 das gasförmige Medium strömt. Diese Lösung bringt den Vorteil mit sich, dass herkömmliche Formteile 13 verwendet werden können.

Figur 4 zeigt ein weiteres Ausführungsbeispiel gemäß der vorliegenden Erfindung, das im Wesentlichen den vorherigen Ausführungsformen entspricht, wobei auch hier das Auslassrohr 4 ein Formteil 13 aufweist, das einen kleineren Durchmesser hat als das Auslassrohr 4. Im Gegensatz zu dem in Figur 3 gezeigten Ausführungsbeispiel befindet sich die Öffnung 11 nicht unmittelbar vor dem Formteil, sondern die Öffnung 11 erstreckt sich durch das Auslassrohr 4 und durch das Formteil 13 hindurch, derart, dass das gasförmige Medium zwischen Teigstrang 10 und der Rohrinnenwand des Formteils 13 strömen und den Luftpuffer an dieser Stelle bilden kann. Damit das Formteil 13 exakt ausgerichtet ist, kann hier eine Arretiereinrichtung (nicht dargestellt), zum Beispiel ein Anschlag, Rasteinrichtung etc. vorgesehen sein. Somit ist sichergestellt, dass die Öffnung 11a im Formteil 13 korrekt zur Öffnung 11 ausgerichtet ist.

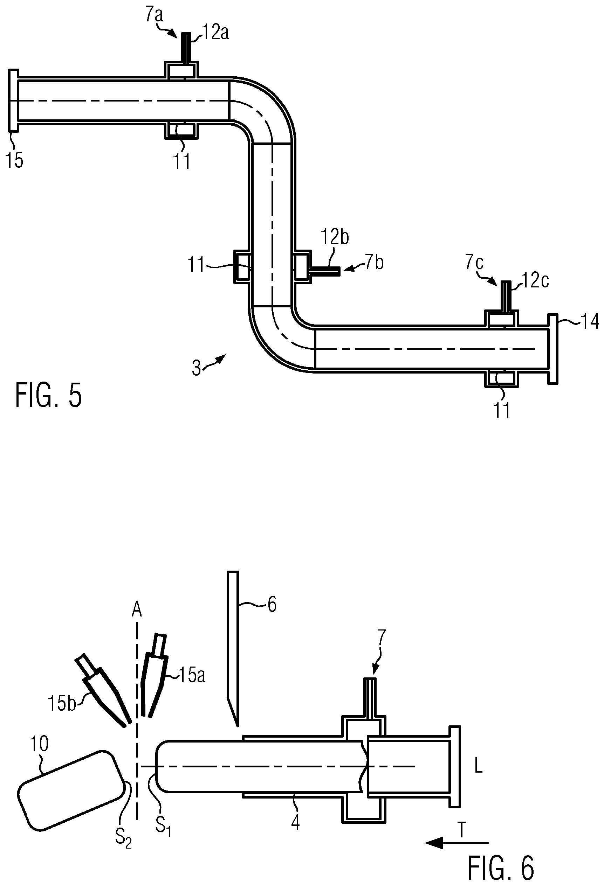

Figur 5 zeigt ein weiteres Ausführungsbeispiel gemäß der vorliegenden Erfindung, das im Wesentlichen den vorherigen Ausführungsbeispielen entspricht. Je länger eine Rohrleitung ist, desto höher ist die Belastung auf den Teig. In solchen Fällen ist es sinnvoll, zusätzlich an einer oder vorzugsweise an mehreren Stellen in der Rohrleitung Belüftungseinrichtungen 7 a,b,c vorzusehen. Figur 5 zeigt ein Transportrohr 3, das an eine Pumpeinrichtung 2 angeschlossen sein kann und an dessen Ende 15 sich entweder ein Auslassrohr 4 anschließen kann oder aber die Auslassöffnung 5 gebildet ist. Die Belüftungseinrichtungen 7 a,b,c sind derart ausgebildet, wie zuvor beschrieben wurde und können über die jeweiligen Leitungen 12a, 12b, 12c mit einer nicht dargestellten Einrichtung verbunden sein, die das gasförmige Medium unter Druck zuführen kann, zum Beispiel wie zuvor beschrieben, einer Pumpe, Kompressor, Druckbehälter etc.

Dadurch kann sichergestellt werden, dass der Luftstrom zwischen Teig 10 und Rohrinnenwandung möglichst nicht abreißt. Der Abstand zwischen zwei benachbarten Belüftungseinrichtungen 7 a, b, c liegt beispielsweise in einem Bereich von 5 cm bis 50 cm des Transportwegs des Teigs.

Figur 6 zeigt ein weiteres Ausführungsbeispiel gemäß der vorliegenden Erfindung, das im Wesentlichen den vorhergehenden Ausführungsformen entspricht. Hier sind zusätzliche Düsen 15a und 15b vorgesehen, die außerhalb des Auslassrohres 4 angeordnet sind, und über die ein gasförmiges Medium an die beiden Stirnflächen des abgetrennten Teigs geblasen werden kann. Dabei sind die Düsen 15a, 15b relativ zu einer Achse A, die senkrecht zur Mittelachse L des Auslassrohrs 4 steht, gerichtet. Beispielsweise sind die Düsen 15a, 15b um einen Winkel von 0° bis +/- 85° zur Achse A geneigt, derart, dass die Stirnflächen (Schnittflächen) angeblasen werden können. Dabei kann die vordere Stirnfläche S1 des noch nicht abgeteilten Teigs von der Düse 15b angeblasen werden und die rückseitige Stirnseite S2 des bereits abgeteilten Teigs von der Düse 15a angeblasen werden. Dies bedeutet, dass über die Belüftungseinrichtung 8 der Außenmantel des Teigs rundum von gasförmigen Medium angeblasen wird und auch die Stirnflächen angeblasen werden können, sodass die gesamte Außenfläche des Teigs angeblasen werden kann und somit eine geringere Feuchte aufweist und für nachfolgende Prozesse weniger klebrig ist und besser verarbeitet werden kann. Die Düsen befinden sich also in einem Bereich bis zu 50 cm von der Auslassöffnung 5.

Nachfolgend wird das erfindungsgemäße Verfahren unter Bezugnahme der Figur 1 näher erläutert.

Zunächst kann ein Teig, beispielsweise ein Brotteig in einem nicht dargestellten Behälter hergestellt werden, indem die einzelnen Komponenten des Teigs zusammengemischt und verknetet werden. Der Teig wird dann über die Pumpeinrichtung 2, zum Beispiel hier die Flügelzellenpumpe in Transportrichtung T in die Rohrleitung 3, 4 gepumpt.

Im Auslassbereich der Rohrleitung, hier zum Beispiel in einem Auslassrohr 4, wird über eine Belüftungseinrichtung 8 gasförmiges Medium zwischen der Rohrinnenwand und dem Außenmantel des Teigs 10 eingebracht.

Das gasförmige Medium kann mindestens ein Medium aus folgender Gruppe sein bzw. umfassen: Druckluft, gereinigte Druckluft, Inertgas oder ein Aerosol sein, etc. Der Druck des zugeführten gasförmigen Mediums ist größer als der Druck in der Rohrleitung 4.

Der Druck des gasförmigen Mediums liegt beispielsweise in einem Bereich von 1 bis 10 bar, während der Druck im Auslassrohr 4 in einem Bereich von 0,1 bar bis 8 bar liegt. Die Förderleistung kann in einem Bereich von 10 - 120 l/min. liegen. Der Druck des zugeführten gasförmigen Mediums ist einstellbar und kann somit an die unterschiedlichen Prozesse angepasst werden, insbesondere auch an den Durchmesser des Teigstrangs. Das bedeutet aber auch, dass, wenn es unterschiedliche Belüftungseinrichtungen 7 in Transportrichtung gibt, wie beispielsweise in der Figur 5 dargestellt, sich der Druck des zugeführten Mediums auch unterscheiden kann, also unterschiedlich einstellbar ist, insbesondere der Druck des zugeführten Mediums im Bereich des Formatteils mit abnehmendem Durchmesser.

Dadurch, dass das gasförmige Medium zugeführt wird, bildet sich zwischen dem Außenmantel des Teigs und der Rohrinnenwandung ein Gaspolster 16, wobei das gasförmige Medium auch in Richtung Auslassöffnung 5 strömt. Nach der Auslassöffnung 5 ist eine Trenneinrichtung 6 vorgesehen, die den Teig vom Teigstrang in Einzelportionen abtrennen kann. Der Teig kann dann auf der Transporteinrichtung 9, hier auf dem Transportband 9 zur weiteren Bearbeitung weitertransportiert werden.

Wie im Zusammenhang mit Figur 6 erläutert wurde, können auch die Stirnseiten der abgetrennten Portionen mithilfe von zusätzlich angeordneten Düsen 15 a,b getrocknet und angeblasen werden. Somit kann der Teig auf der gesamten Oberfläche getrocknet werden.

## Patentansprüche

1. Teigteiler (1) mit einer Pumpeinrichtung (2) und einer sich daran anschließenden Rohrleitung (4,3) mit freiem Rohrquerschnitt durch die ein Teigstrang transportiert werden kann, wobei in einem Bereich zwischen der Pumpeinrichtung (2) und der Auslassöffnung (5) der Rohrleitung (4,3) eine Belüftungseinrichtung (7) angeordnet ist, die ein gasförmiges Medium zwischen Rohrinnenwand und dem geschlossenen Außenmantel des Teigstrangs (10) einbringen kann, wobei zwischen Rohrinnenwand und dem geschlossenen Außenmantel des Teigstrangs (10) ein Luftpolster (16) um den Außenmantel des Teigstrangs (10) erzeugt wird,
wobei die Belüftungseinrichtung (7) mindestens eine Öffnung (11) in der Rohrleitung (4,3) umfasst, über die das gasförmige Medium zuführbar ist, wobei die mindestens eine Öffnung (11) als Spalt oder als um den Umfang der Rohrleitung (4,3) verteilte Öffnungen ausgebildet ist und wobei
die Belüftungseinrichtung (7) eine ringförmige Verteilerkammer (8) aufweist, über die das gasförmige Medium in die mindestens eine Öffnung (11) geleitet werden kann.

2. Teigteiler (1) nach Anspruch 1, **dadurch gekennzeichnet, dass** der Spalt ein Ringspalt ist oder dass die um den Umfang des Rohrs verteilte Öffnungen (11) als Lochkranz in der Form eines Sintermaterials ausgebildet sind.

3. Teigteiler (1) nach Anspruch 1 oder 2, **dadurch gekennzeichnet, dass** die mindestens eine Öffnung (11) ca. 2-150 mm von der Auslassöffnung (5) beabstandet ist.

4. Teigteiler (1) nach mindestens einem der Ansprüche 1-3, **dadurch gekennzeichnet, dass** die Belüftungseinrichtung (7) eine Einrichtung umfasst, die das gasförmige Medium unter Druck zuführen kann, insbesondere eine Pumpe, ein Kompressor oder einen Druckbehälter.

5. Teigteiler (1) nach mindestens einem der Ansprüche 1-4, **dadurch gekennzeichnet, dass** die Rohrleitung (4,3) entweder
a) ein Auslassrohr (4), oder
b) ein Transportrohr (3) und ein nachgeordnetes Auslassrohr (4) umfasst, wobei das Auslassrohr (4) optional ein Formteil (13) zum Formen des Teigs (10) aufweist und/oder vorzugsweise
nach der Auslassöffnung (5) eine Trenneinheit zum Unterteilen des Teigstrangs (10) angeordnet ist.

6. Teigteiler (1) nach mindestens Anspruch 5, **dadurch gekennzeichnet, dass** im Auslassrohr (4) ein Formteil (13) eingefügt ist, dessen Innenwand die Rohrinnenwand bildet, wobei sich die mindestens eine Öffnung (11) zum Einbringen des gasförmigen Mediums bis durch das Formteil (13) erstreckt und/oder die mindestens eine Öffnung in der Wandung des Auslassrohrs vor dem eingefügten Formteil (13) ausgebildet ist.

7. Teigteiler (1) nach mindestens einem der Ansprüche 1-6, **dadurch gekennzeichnet, dass** in der Rohrleitung (4,3) mehrere Belüftungseinrichtungen (7) in Transportrichtung hintereinander angeordnet sind, insbesondere im Transportrohr (3) zumindest eine Belüftungseinrichtung (7) angeordnet ist.

8. Teigteiler (1) nach mindestens einem der Ansprüche 1-6, **dadurch gekennzeichnet, dass** in Transportrichtung T nach der Auslassöffnung (5) und nach der Trenneinrichtung (6) mindestens eine zusätzliche Düse angeordnet ist, die insbesondere derart gerichtet ist, dass gasförmiges Medium an mindestens eine Stirnfläche des abgetrennten Teigs (10) geblasen werden kann.

9. Verfahren zum Abteilen von Teig (10), insbesondere mit einer Vorrichtung (1) nach mindestens einem der Ansprüche 1-8, **dadurch gekennzeichnet, dass**
ein Teigstrang (10) über eine Pumpeinrichtung (2) durch eine Rohrleitung (4,3) mit freien Querschnitt gefördert wird und mittels Belüftungseinrichtung (7) ein gasförmiges Medium zwischen Rohrinnenwand und den geschlossenen Außenmantel des Teigstrangs (10) eingebracht wird, wobei zwischen Rohrinnenwand und dem geschlossenen Außenmantel des Teigstrangs (10) ein Luftpolster (16) um den Außenmantel des Teigstrangs (10) erzeugt wird, wobei die Belüftungseinrichtung(7) mindesten eine Öffnung (11) in der Rohrleitung (4,3) umfasst, über die das gasförmige Medium zuführbar ist, wobei die mindestens eine Öffnung (11) als Spalt oder als um den Umfang der Rohrleitung (4,3) verteilte Öffnungen ausgebildet ist und wobei die Belüftungseinrichtung (7) eine ringförmige Verteilerkammer (8) aufweist, über die das gasförmige Medium in die mindestens eine Öffnung (11) geleitet wird.

10. Verfahren nach Anspruch 9, **dadurch gekennzeichnet, dass** sich das gasförmige Medium in Transportrichtung T in Richtung Auslassöffnung (5) der Rohrleitung (4,3) bewegt.

11. Verfahren nach Anspruch 9 oder 10 **dadurch gekennzeichnet, dass** das gasförmige Medium mindestens ein Gas aus folgender Gruppe ist oder umfasst: Druckluft, gereinigte Druckluft, getrocknete Druckluft, Inertgas und / oder ein Aerosol, das Aerosolpartikel aufweist.

12. Verfahren nach mindestens einem der Ansprüche 9-11, **dadurch gekennzeichnet, dass** der Druck des gasförmigen Mediums einstellbar ist, und insbesondere größer ist als der Druck in der Rohrleitung (4,3).

13. Verfahren nach mindestens einem der Ansprüche 9-12, **dadurch gekennzeichnet, dass** am Auslassende der Rohrleitung (4,3) eine Trenneinrichtung (6) vorgesehen ist, die den Teigstrang (10) in Einzelportionen abteilt.

14. Verfahren nach mindestens einem der Ansprüche 9-13, **dadurch gekennzeichnet, dass** das Luftpolster eine Stärke von d = 0,05 mm - 3 mm aufweist, wobei die Rohrleitung (3,4) einen Durchmesser von 30 mm - 120 mm aufweist und wobei der abgeteilte Teigstrang (10) insbesondere eine Länge aufweist, die im Wesentlichen dem Durchmesser der Rohrleitung entspricht (+/- 20%) oder länger als der Durchmesser der Rohrleitung ist.

## Claims

1. Dough divider (1) with a pump device (2) and an adjoining tube (4,3) having a free tube cross-section through which a strand of dough can be transported wherein
a ventilation device (7) is arranged in a region between said pump device (2) and said outlet opening (5) of said tube (4,3) and can introduce a gaseous medium between the tube inner wall and the closed outer skin of said strand of dough (10), wherein an air cushion (16) is created between said tube inner wall and said closed outer skin of said strand of dough (10) around said outer skin of said strand of dough (10),
wherein said ventilation device (7) comprises at least one opening (11) in said tube (4, 3) through which said gaseous medium can be supplied, where said at least one opening (11) is configured as a gap or as openings (11) distributed around the circumference of said tube, wherein
the ventilation device (7) comprises an annular distribution chamber (8) through which said gaseous medium can be passed into said at least one opening.

2. Dough divider (1) according to claim 1, **characterized in that** said gap is an annular gap, or that the openings (11) distributed around the circumference of said tube are formed as a perforated ring or in the form of sintered material.

3. Dough divider (1) according to claim 1 or 2, **characterized in that** said at least one opening (11) is spaced approximately 2-150 mm from said outlet opening (5).

4. Dough divider (1) according to at least one of the claims 1-3, **characterized in that** said ventilation device (7) comprises a device which can supply said gaseous medium under pressure, in particular a pump, a compressor, or a pressure vessel.

5. Dough divider (1) according to at least one of the claims 1-4 **characterized in that** said tube (4,3) comprises either
a) an outlet tube (4), or
b) a transport tube (3) and a downstream outlet tube (4), where
said outlet tube (4) optionally comprises a mold part (13) for shaping said dough (10) and/or preferably
a separating unit for dividing said strand of dough (10) is arranged downstream of said outlet opening (5).

6. Dough divider (1) according to at least claim 5, **characterized in that** a mold part (13) is inserted into said outlet tube (4) and its inner wall forms the tube inner wall, where said at least one opening (11) for introducing said gaseous medium extends through said mold part (13) and/or said at least one opening is formed in the wall of said outlet tube upstream of said mold part (13) inserted.

7. Dough divider (1) according to at least one of the claims 1-6, **characterized in that** several ventilation devices (7) are arranged consecutively in the direction of transport in said tube (4,3), in particular at least one ventilation device (7) is arranged in said transport tube (3).

8. Dough divider (1) according to at least one of the claims 1-6, **characterized in that** at least one additional nozzle is arranged in the direction of transport T downstream of said outlet opening (5) and downstream of said separating device (6) and is in particular directed such that gaseous medium can be blown onto at least one face side of said severed dough (10).

9. Method for dividing dough (10), in particular with a device (1) according to at least one of the claims 1-8, **characterized in that**
a strand of dough (10) is conveyed by a pump device (2) through a tube (4,3) having a free cross-section and a gaseous medium is introduced between the tube inner wall and the closed outer skin of said strand of dough (10) by way of a ventilation device (7) wherein an air cushion (16) is created between said tube inner wall and said closed outer skin of said strand of dough (10) around said outer skin of said strand of dough (10), wherein
said ventilation device (7) comprises at least one opening (11) in said tube (4, 3) through which said gaseous medium can be supplied, wherein said at least one opening (11) is configured as a gap or as openings (11) distributed around the circumference of said tube and wherein
the ventilation device (7) comprises an annular distribution chamber (8) through which said gaseous medium can be passed into said at least one opening (11).

10. Method according to claim 9, **characterized in that** said gaseous medium moves in the direction of transport T in the direction of said outlet opening (5) of said tube (4,3).

11. Method according to claim 9 or 10, **characterized in that** the gaseous medium is or comprises at least one gas from the following group: compressed air, purified compressed air, dried compressed air, inert gas, and/or an aerosol which comprises aerosol particles.

12. Method according to at least one of the claims 9-11, **characterized in that** the pressure of said gaseous medium is adjustable, and in particular is higher than the pressure in said tube (4,3).

13. Method according to at least one of the claims 9-12, **characterized in that** a separating device (6) is provided at the outlet end of said tube (4,3) and divides said strand of dough (10) into individual portions.

14. Method according to at least one of the claims 9-13, **characterized in that** the air cushion has a thickness of d = 0.05 mm - 3 mm, where said tube (3, 4) has a diameter of 30 mm - 120 mm and said divided strand of dough (10) has in particular a length which corresponds substantially to the diameter of said tube (+/- 20%) or is longer than the diameter of said tube.

## Revendications

1. Diviseur de pâte (1) avec un dispositif de pompage (2) et une conduite tubulaire (4, 3) s'y raccordant avec une section transversale de tube libre à travers laquelle un boudin de pâte peut être transporté, où
dans une zone entre le dispositif de pompage (2) et l'ouverture de sortie (5) de la conduite tubulaire (4, 3) est disposé un dispositif d'aération (7) qui peut introduire un milieu gazeux entre la paroi intérieure du tube et l'enveloppe extérieure fermée du boudin de pâte (10), un coussin d'air (16) étant généré autour de l'enveloppe extérieure du boudin de pâte (10) entre la paroi intérieure du tube et l'enveloppe extérieure fermée du boudin de pâte (10), le dispositif d'aération (7) comprenant au moins une ouverture (11) dans la conduite tubulaire (4, 3), par laquelle le milieu gazeux peut être amené, l'au moins une ouverture (11) étant conçue comme une fente ou comme des ouvertures réparties autour de la périphérie de la conduite tubulaire (4, 3) et le dispositif d'aération (7) présentant une chambre de distribution (8) annulaire, par laquelle le milieu gazeux peut être conduit dans la au moins une ouverture (11).

2. Diviseur de pâte (1) selon la revendication 1, **caractérisé en ce que** la fente est une fente annulaire ou **en ce que** les ouvertures (11) réparties sur le pourtour du tube sont réalisées sous la forme de couronne de trous ou sous la forme d'un matériau fritté.

3. Diviseur de pâte (1) selon revendication 1 ou 2, **caractérisé en ce que** la au moins une ouverture (11) est espacée d'environ 2 à 150 mm de l'ouverture de sortie (5).

4. Diviseur de pâte (1) selon au moins l'une des revendications 1 à 3, **caractérisé en ce que** le dispositif d'aération (7) comprend un dispositif apte à fournir le milieu gazeux sous pression, notamment une pompe, un compresseur ou un réservoir sous pression.

5. Diviseur de pâte (1) selon au moins l'une des revendications 1 à 4, **caractérisé en ce que** la conduite tubulaire (4, 3) est soit
a) un tube de sortie (4), soit
b) comprend un tube de transport (3) et un tube de sortie (4) en aval, dans lequel
le tube de sortie (4) comporte en option une partie de moulage (13) pour le moulage de la pâte (10) et/ou de préférence
une unité de séparation est disposée après l'ouverture de sortie (5) pour subdiviser le boudin de pâte (10).

6. Diviseur de pâte (1) selon au moins la revendication 5, **caractérisé en ce qu'**une pièce moulée (13) est insérée dans le tube de sortie (4), dont la paroi intérieure forme la paroi intérieure du tube, la au moins une ouverture (11) pour l'introduction du milieu gazeux s'étendant jusqu'à travers la pièce moulée (13) et/ou la au moins une ouverture étant formée dans la paroi du tube de sortie en aval de la pièce moulée (13) insérée.

7. Diviseur de pâte (1) selon au moins l'une des revendications 1 à 6, **caractérisé en ce que** plusieurs dispositifs d'aération (7) sont disposés les uns derrière les autres dans le sens de transport dans la conduite tubulaire (4, 3), en particulier au moins un dispositif d'aération (7) est disposé dans le tube de transport (3).

8. Diviseur de pâte (1) selon au moins l'une des revendications 1 à 6, **caractérisé en ce que**, dans le sens de transport T, après l'ouverture de sortie (5) et après le dispositif de séparation (6), est disposée au moins une buse supplémentaire, qui est notamment orientée de telle sorte que du milieu gazeux peut être soufflé sur au moins une face frontale de la pâte séparée (10).

9. Procédé de division de pâte (10), en particulier avec un dispositif (1) selon au moins l'une des revendications 1 à 8, **caractérisé en ce que**
un boudin de pâte (10) traverse, par l'intermédiaire d'un dispositif de pompage (2), une conduite tubulaire (4, 3) pourvue de trous libres (5, 6).
(10), un coussin d'air (16) étant créé autour de l'enveloppe extérieure du boudin de pâte (10) entre la paroi intérieure du tube et l'enveloppe extérieure fermée du boudin de pâte (10), le dispositif d'aération (7) comportant au moins une ouverture (11) dans la conduite tubulaire (4, 3), par laquelle le milieu gazeux peut être amené, l'au moins une ouverture (11) étant conçue comme une fente ou comme des ouvertures réparties autour de la périphérie de la conduite tubulaire (4, 3) et le dispositif d'aération (7) présentant une chambre de distribution (8) annulaire, par laquelle le milieu gazeux est amené dans la au moins une ouverture (11).

10. Procédé selon la revendication 9, **caractérisé en ce que** le milieu gazeux se déplace dans le sens de transport T en direction de l'ouverture de sortie (5) de la conduite tubulaire (4, 3).

11. Procédé selon la revendication 9 ou 10, **caractérisé en ce que** le milieu gazeux est, ou comprend, au moins un gaz du groupe suivant : de l'air comprimé, de l'air comprimé purifié, de l'air comprimé séché, un gaz inerte et/ou un aérosol qui présente des particules d'aérosol.

12. Procédé selon au moins l'une des revendications 9 à 11, **caractérisé en ce que** la pression du fluide gazeux est réglable, et notamment supérieure à la pression dans la conduite tubulaire (4, 3).

13. Procédé selon au moins l'une des revendications 9 à 12, **caractérisé en ce qu'**un dispositif de séparation (6) est prévu à l'extrémité de sortie de la conduite tubulaire (4, 3), qui divise le boudin de pâte (10) en portions individuelles.

14. Procédé selon au moins l'une des revendications 9 à 13, **caractérisé en ce que** le coussin d'air a une épaisseur de d = 0,05 mm - 3 mm, dans lequel la conduite tubulaire (3, 4) a un diamètre de 30 mm - 120 mm et dans lequel le boudin de pâte divisé (10) a en particulier une longueur qui correspond sensiblement au diamètre de la conduite tubulaire (+/- 20%) ou qui est plus longue que le diamètre de la conduite tubulaire.
